(19) Europäisches Patentamt
European Patent Office
Office européen des brevets

(11) **EP 4 404 007 A1**

(12) **EUROPÄISCHE PATENTANMELDUNG**

(43) Veröffentlichungstag:
**24.07.2024 Patentblatt 2024/30**

(21) Anmeldenummer: **23152470.3**

(22) Anmeldetag: **19.01.2023**

(51) Internationale Patentklassifikation (IPC):
**G05B 13/02** (2006.01) **G05B 13/04** (2006.01)

(52) Gemeinsame Patentklassifikation (CPC):
**G05B 13/04; G05B 13/0265; G05B 13/027;**
G05B 2219/34416

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder:
• **Primetals Technologies Austria GmbH**
**4031 Linz (AT)**
• **Primetals Technologies Germany GmbH**
**91058 Erlangen (DE)**

(72) Erfinder:
• **Grasserbauer, Klaus**
**4311 Schwertberg (AT)**

• **Hartl, Franz**
**4720 Kallham (AT)**
• **Husakovic, Adnan**
**4150 Rohrbach (AT)**
• **Krahwinkler, Petra**
**4502 St. Marien (AT)**
• **Tushev, Anton**
**91056 Erlangen (DE)**

(74) Vertreter: **Metals@Linz**
**Primetals Technologies Austria GmbH**
**Intellectual Property Upstream IP UP**
**Turmstraße 44**
**4031 Linz (AT)**

(54) **PROZESSMODELL, ENTWICKLUNGSVERFAHREN UND ÜBERWACHUNGSVERFAHREN**

(57) Die vorliegende Erfindung betrifft ein Verfahren (100) zur Entwicklung eines Prozessmodells (1) für die Sensorüberwachung, ein entsprechend entwickeltes Prozessmodell (1) sowie ein Verfahren (200) zur Überwachung eines Sensors (9). Dabei wird wenigstens eine Korrelation (K) zwischen Prozessparametern (7) eines technischen Prozesses (2) und/oder einem Sensorsignal (W1) wenigstens eines Sensors (8), der einer Sensorengruppe (10) zur Überwachung des Prozesses (2) angehört, und einem Sensorsignal (W2) wenigstens eines weiteren Sensors (9), welcher der Sensorengruppe (10) angehört, vorgegeben (S1). Zudem wird ein datengetriebenes Modell (M), welches aus vorgegebenen Sensorsignalen (W1) von mehreren Sensoren (8) der Sensorengruppe (10) ein Sensorsignal (W2') eines anderen Sensors (9) der Sensorengruppe (10) prädiziert, auf Grundlage der wenigstens einen vorgegebenen Korrelation (K) bereitgestellt (S2).

FIG 1

EP 4 404 007 A1

## Beschreibung

Gebiet der Technik

Die vorliegende Erfindung betrifft ein Verfahren zur Entwicklung eines Prozessmodells für die Sensorüberwachung, ein entsprechend entwickeltes Prozessmodell sowie ein Verfahren zur Überwachung eines Sensors, insbesondere im Bereich der Metallproduktion und/oder Metallverarbeitung.

Stand der Technik

Viele technische Prozesse werden durch eine Vielzahl von Sensoren überwacht und gegebenenfalls auf Grundlage der dabei erzeugten Sensorsignale geregelt. Entsprechend können Sensorfehler, zum Beispiel ein sogenanntes "Abdriften" von Sensorsignalen oder ein erratisches Sensorverhalten, ernste Folgen nicht nur betriebswirtschaftlicher Art, sondern beispielsweise auch im Hinblick auf die Qualität der hergestellten Produkte oder die Betriebssicherheit haben. Daher wurden Verfahren entwickelt, um Sensoren während ihres Betriebs überwachen und die von ihnen gelieferten Sensorsignale auf Plausibilität prüfen zu können.

Einige dieser Verfahren stützen sich auf statistische Modelle des ablaufenden Prozesses. Solche Modelle können aus Datensätzen, die eine Vielzahl von gemessenen Prozessparametern enthalten, entwickelt werden und werden daher auch als "datengetriebene Modelle" bezeichnet. Dabei ist es wichtig, dass die Datensätze eine ausreichende Größe haben, um zuverlässig Rückschlüsse auf die Beziehungen der Prozessparameter und/oder Sensorsignale untereinander ziehen zu können.

Sensorfehler können zum Beispiel durch Alterung von Sensorkomponenten ausgelöst werden. Je nach Einsatz der Sensoren können jedoch auch prozessbedingte Störungen einzelner Sensoren auftreten. Besonders in der Metallherstellung und -verarbeitung, bei der sehr raue Umgebungsbedingungen wie hohe Temperaturen, Drücke, Lärm, Vibrationen, Staubentwicklung und dergleichen vorherrschen, kann es zu starken Beeinträchtigungen der Sensoren kommen. Daher eignen sich konventionelle statistische Modelle zur Überwachung der Sensoren nicht oder nur bedingt zum Einsatz auf diesen technischen Gebieten.

Zusammenfassung der Erfindung

Vor diesem Hintergrund ist es eine Aufgabe der vorliegenden Erfindung, die Überwachung eines Sensors mithilfe eines Prozessmodells zu verbessern, beispielsweise auch dann zu ermöglichen, wenn die vom Sensor gelieferten Sensorsignale mit einem großen Messfehler behaftet sind.

Diese Aufgabe wird gelöst durch ein Verfahren zur Entwicklung eines Prozessmodells für die Sensorüberwachung, einem entsprechend entwickelten Prozessmodell sowie einem Verfahren zur Überwachung eines Sensors gemäß den unabhängigen Ansprüchen.

Bevorzugte Ausführungsformen sind Gegenstand der abhängigen Ansprüche und der folgenden Beschreibung.

Das, insbesondere computerimplementierte, Verfahren zur Entwicklung eines Prozessmodells für die Sensorüberwachung gemäß einem ersten Aspekt der Erfindung weist auf:
(i) Vorgeben wenigstens einer Korrelation zwischen Prozessparametern eines technischen Prozesses und/oder einem Sensorsignal wenigstens eines Sensors, der einer Sensorengruppe zur Überwachung des Prozesses angehört, einerseits und einem Sensorsignal wenigstens eines weiteren Sensors, welcher der Sensorengruppe angehört, andererseits; und (ii) Bereitstellen eines datengetriebenen Modells, welches aus vorgegebenen Sensorsignalen von mehreren Sensoren der Sensorengruppe ein Sensorsignal eines anderen Sensors der Sensorengruppe prädiziert, auf Grundlage der wenigstens einen vorgegebenen Korrelation.

Eine Korrelation im Sinne der vorliegenden Erfindung ist vorzugsweise eine wechselseitige Beziehung zwischen wenigstens einem Prozessparameter und einem Sensorsignal wenigstens eines Sensors und/oder zwischen einem Sensorsignal wenigstens eines ersten Sensors und einem Sensorsignal wenigstens eines zweiten Sensors. Zweckmäßigerweise bildet eine Korrelation eine Kausalität in einem technischen Prozess ab. Beispielsweise beschreibt eine Korrelation einen Zusammenhang zwischen wenigstens einem Prozessparameter und einem Sensorsignal und/oder wenigstens einem Sensorsignal wenigstens eines ersten und einem Sensorsignal wenigstens eines zweiten Sensors. Entsprechend kann auf Grundlage einer Korrelation zwischen einem Prozessparameter und einem Sensorsignal das Sensorsignal vorhergesagt werden, wenn die Prozessbedingungen oder der Kontext, in dem der Sensor arbeitet, bekannt sind. Ebenso kann auf Grundlage einer Korrelation zwischen einem Sensorsignal eines ersten und zweiten Sensors das Sensorsignal des zweiten Sensors vorhergesagt werden, wenn das Sensorsignal des ersten Sensors bekannt ist.

Ein Sensorsignal im Sinne der vorliegenden Erfindung ist vorzugsweise ein Signal, dass von einem Sensor während seines Betriebs, zum Beispiel während der Erfassung eines Prozessparameters, bereitgestellt wird. Ein Sensorsignal kann insbesondere einen Prozessparameter charakterisieren. Beispielsweise kann ein Sensorsignal einen Wert repräsentieren, den der Prozessparameter angenommen hat. Folglich kann ein Sensorsignal als Messwert verstanden werden.

Ein datengetriebenes Modell im Sinne der vorliegenden Erfindung ist vorzugsweise ein Modell, das einen technischen Prozess durch Korrelationen zwischen Daten, die den Prozess charakterisieren, abbildet. Insbesondere kann ein datengetriebenes Modell auf einer statistischen Auswertung der Daten, die den Prozess charakterisieren, beruhen. Folglich kann ein datengetriebenes Modell als statistisches Modell verstanden werden. Infolgedessen basiert ein datengetriebenes Modell nicht auf physikalischen Erkenntnissen oder Gesetzen, sondern ist empirisch.

Ein Aspekt der Erfindung beruht auf dem Ansatz, einem technischen Prozess inhärente Eigenschaften explizit in einer statistischen Beschreibung des Prozesses zu berücksichtigen bzw. deren Berücksichtigung sicherzustellen. Beispielsweise können bekannte, im Prozessablauf auftretende Kausalitäten bei der Entwicklung eines datengetriebenen Modells berücksichtigt werden, insbesondere der Entwicklung dieses Modells zugrunde gelegt werden. So ist es etwa denkbar, ausgehend von diesen Kausalitäten das datengetriebene Modell bereitzustellen, zum Beispiel zu berechnen, zu fitten oder zu trainieren. Die Berücksichtigung der dem Prozess inhärenten Eigenschaften im datengetriebenen Modell kann es erlauben, die Anforderungen an einen Datensatz, der zur Entwicklung des Modells zum Beispiel statistisch ausgewertet wird, zu senken. Beispielsweise kann die Größe des Datensatzes reduziert werden. Alternativ oder zusätzlich kann die Berücksichtigung der inhärenten Eigenschaften das datengetriebene Modell robuster machen, sodass auch bei verrauschten Sensorsignalen eine zuverlässige Überwachung der entsprechenden Sensoren möglich ist.

Einem technischen Prozess inhärente Eigenschaften können zum Beispiel aus dem Erfahrungsschatz einer Fachperson bekannt sein. Infolgedessen lässt sich die Berücksichtigung inhärenter Prozesseigenschaften bei der statistischen Beschreibung des Prozesses auch als das Einbringen von Experten- oder Domänenwissen verstehen. Rein beispielhaft kann solches Expertenwissen die physikalischen Zusammenhänge zwischen verschiedenen Sensoren oder das physikalische Verhalten einzelner Sensoren betreffen. Es kann beispielsweise bekannt sein, dass durch Sensorsignale repräsentierte Messwerte eines Sensors überhaupt nur in einem bestimmten, vorbekannten (vordefinierten) Wertebereich liegen können und/oder physikalische Grenzen dafür existieren, wie schnell sich ein Sensorsignal eines Sensors überhaupt ändern kann. Alternativ oder zusätzlich kann bekannt sein, dass und insbesondere auf welche Weise Sensorsignale eines Sensors von Sensorsignalen eines anderen Sensors abhängen.

Gegebenenfalls ist es auch möglich, alternativ oder zusätzlich zum Einbringen von Expertenwissen einen Algorithmus zur Ermittlung von Kausalitäten einzusetzen.

Einem technischen Prozess inhärente Eigenschaften können vorteilhaft als Korrelation zwischen Prozessparametern und einem Sensorsignal wenigstens eines Sensors ausgedrückt werden. Ein Beispiel dafür ist, dass bei voreingestellter Heizleistung nur ein bestimmter Temperaturbereich erreicht werden kann.

Alternativ oder zusätzlich können diese Prozesseigenschaften auch als Korrelation zwischen einem Sensorsignal wenigstens eines ersten Sensors und einem Sensorsignal wenigstens eines zweiten Sensors ausgedrückt werden. Ein Beispiel dafür ist, dass mit gemessener Dickenzunahme eines aufgeheizten Gutes (aufgrund der höheren Wärmekapazität und der damit verbundenen längeren Abkühlzeit) eine erhöhte Temperatur des Gutes im weiteren Prozessverlauf zu erwarten ist. Vor diesem Hintergrund wird zweckmäßigerweise wenigstens eine derartige Korrelation vorgegeben, um dann auf Grundlage dieser Korrelation das datengetriebene Modell bereitzustellen.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

Die Bereitstellung eines datengetriebenen Modells kann grundsätzlich auf unterschiedliche Weisen erfolgen. Es ist beispielsweise denkbar, das datengetriebene Modell unter Berücksichtigung der wenigstens einen vorgegebenen Korrelation zu berechnen. Insbesondere kann ein Standardalgorithmus zum Berechnen eines datengetriebenen Modells auf Grundlage der wenigstens einen vorgegebenen Korrelation modifiziert werden. Beispielsweise lässt sich die Weise, in der Prinzipalkomponenten eines Trainingsdatensatzes aus einer Vielzahl von Sensordaten berechnet werden, mithilfe der wenigstens einen vorgegebenen Korrelation anpassen. So ist es etwa denkbar, dass Einträge einer Kovarianzmatrix des Systems auf Grundlage der vorgegebenen Korrelation modifiziert oder vorgegeben werden.

Um eine derartige Anpassung vornehmen zu können, ist es vorteilhaft, wenn beim Vorgeben der wenigstens einen Korrelation ein physikalisches Modell bereitgestellt wird, das aus vorgegebenen Prozessparametern des Prozesses oder einem vorgegebenen Sensorsignal des wenigstens einen Sensors das Sensorsignal des wenigstens einen weiteren Sensors prädiziert. Ein solches physikalisches Modell kann zum Beispiel in Form einer physikalischen Gleichung bereitgestellt werden. Zweckmäßigerweise beschreibt das physikalische Modell einen oder mehrere physikalische Zusammenhänge ("Kausalitäten") zwischen Prozessparametern des Prozesses.

Auf Grundlage eines solchen physikalischen Modells kann ein datengetriebenes Modell besonders präzise trainiert werden. Beispielsweise ist es denkbar, ein neuronales Netz mit einem Trainingsdatensatz zu trainieren, der auf Grundlage der wenigstens einen vorgegebenen Korrelation vorausgewählte Sensorsignale der mehreren Sensoren aus der Sensorengruppe enthält. Durch diese Vorauswahl von Sensorsignalen lässt sich die Menge der beim Training zu verarbeitenden Daten signifikant verringern.

Alternativ oder zusätzlich ist es möglich, die wenigstens eine vorgegebene Korrelation mithilfe von "deep unfolding" in einem neuronalen Netz abzubilden. Hierbei werden die wenigstens eine vorgegebene Korrelation beschreibende klassische oder "first principle"-Modelle, insbesondere die ihnen zugrunde liegende(n) mathematische(n) Gleichung(en), zur Bildung des neuronalen Netzes verwendet.

Wie bereits angedeutet ist es bevorzugt, dass dem Bereitstellen des datengetriebenen Modells Trainingsdaten zugrunde gelegt werden. Diese Trainingsdaten enthalten zweckmäßigerweise eine Vielzahl an Sensorsignalen der mehreren Sensoren der Sensorengruppe. Daraus lassen sich zuverlässig statistische Zusammenhänge zwischen den Sensorsignalen ableiten.

Die Berücksichtigung der wenigstens einen vorgegebenen Korrelation beim Bereitstellen des datengetriebenen Modells kann auf verschiedene Weisen erfolgen. Beispielsweise können die Trainingsdaten auf Grundlage der wenigstens einen vorgegebenen Korrelation transformiert werden. Insbesondere können auf Grundlage der vorgegebenen Korrelation Trainingsdaten erzeugt werden, etwa indem aus zwei gemessenen Größen eine dritte, beispielsweise mit diesen physikalisch verknüpfte, Größe berechnet und dem Bereitstellen des datengetriebenen Modells zugrunde gelegt wird. Alternativ oder zusätzlich ist es denkbar, die Trainingsdaten an das datengetriebene Modell anzupassen. Dafür können die Trainingsdaten normiert und/oder verschiedene Sensorsignale im Hinblick auf ihre physikalischen Einheiten aneinander angepasst werden. Ebenso kann eine "loss function" auf Grundlage der wenigstens einen vorgegebenen Korrelation angepasst oder ausgewählt werden werden oder die Architektur des datengetriebenen Modells im Hinblick auf die wenigstens eine vorgegebene Korrelation ausgewählt werden.

Das derart entwickelte Prozessmodell kann speziell zum Einsatz in der Metallherstellung und/oder -verarbeitung geeignet sein. Mit seiner Hilfe lassen sich Sensoren, welche den Herstellungs- und Verarbeitungsprozess erfassen, zuverlässig überwachen. Das derart entwickelte Prozessmodell kann insbesondere die Vorteile eines physikalischen Modells, nämlich präzise und aufwandsgünstige Prädiktion von physikalischen Größen bzw. Messwerten oder Sensorsignalen, mit denen datengetriebener Modelle, nämlich Robustheit gegenüber fluktuierenden oder fehlerbehafteten Eingangsgrößen, vereinen.

Vor diesem Hintergrund ist ein Sensormodell für die Sensorüberwachung gemäß einem zweiten Aspekt der Erfindung in bevorzugter Weise erhältlich durch ein Verfahren gemäß dem ersten Aspekt der Erfindung.

Ein Verfahren zur Überwachung eines Sensors gemäß einem dritten Aspekt der Erfindung weist auf: (i) Prädizieren eines Sensorsignals wenigstens eines Sensors einer Sensorengruppe mithilfe eines Prozessmodells gemäß dem zweiten Aspekt der Erfindung, wobei die Prädiktion des Sensorsignals des wenigstens einen Sensors auf Grundlage von Sensorsignalen mehrerer anderer Sensoren der Sensorengruppe durchgeführt wird; und (ii) Ermitteln eines Maßes für die Sensorzuverlässigkeit des wenigstens einen Sensors auf Grundlage des prädizierten Sensorsignals und eines tatsächlichen Sensorsignals des Sensors.

Durch einen Vergleich des prädizierten Sensorsignals mit dem tatsächlichen Sensorsignal, also zum Beispiel einem prädizierten Messwert mit einem tatsächlichen Messwert, kann ein Sensor-Validierungsindex (engl. "sensor validation index", SVI) ermittelt werden. Der Sensor-Validierungsindex stellt zweckmäßigerweise ein Maß für die Sensorzuverlässigkeit dar.

Der Vergleich kann beispielsweise durch Verhältnisbildung erfolgen. Dabei ist es auch denkbar, dass statt einem direkten Vergleich der Sensorsignale von den Sensorsignalen abgeleitete bzw. aus den Sensorsignalen berechnete Größen miteinander verglichen werden.

Beispielsweise kann dem Ermitteln des Maßes für die Sensorzuverlässigkeit ein Maß für die Abweichung eines ersten Messergebnisses der mehreren Sensoren der Sensorengruppe von einem vorgegebenen Messergebnis einerseits und ein Maß für die Abweichung eines zweiten Messergebnisses der mehreren Sensoren der Sensorengruppe vom vorgegebenen Messergebnis andererseits zugrunde gelegt werden. Zweckmäßigerweise enthält das erste Messergebnis dabei das prädizierte Sensorsignal des wenigstens einen Sensors, und das zweite Messergebnis enthält das tatsächliche Sensorsignal des wenigstens einen Sensors. Ein derartiges Maß für eine Abweichung von einem vorgegebenen Messergebnis kann beispielsweise durch Ermittlung eines sogenannten "squared prediction error" (SPE) gefunden werden. Ein Messergebnis kann hierbei als Vektor, der die Sensorsignale (die Messergebnisse) jedes einzelnen der mehreren Sensoren aus der Sensorengruppe enthält, verstanden werden.

Um das Verfahren beschleunigen zu können, also zum Beispiel noch schneller eine Aussage darüber treffen zu können, ob ein Sensorsignal zuverlässig ist, wird vorzugsweise geprüft, ob das tatsächliche Sensorsignal ein Plausibilitätskriterium erfüllt. So kann etwa geprüft werden, ob der mit dem Sensorsignal assoziierte Messwert in einem erwartbaren Intervall liegt oder ob sich das Sensorsignal schneller als physikalisch möglich geändert hat. Wird das Plausibilitätskriterium nicht erfüllt, kann direkt auf einen Sensorfehler geschlossen werden, noch bevor das datengetriebene Modell ausgewertet wird. Folglich wird das Sensorsignal zweckmäßigerweise in Abhängigkeit eines Ergebnisses der Prüfung, vorzugsweise nämlich nur dann, wenn das Plausibilitätskriterium erfüllt ist, mithilfe des Prozessmodells prädiziert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen, zumindest teilweise schematisch:

FIG 1 ein Beispiel eines Verfahrens zur Entwicklung eines Prozessmodells;

FIG 2 ein Beispiel eines Verfahrens zur Überwachung eines Sensors; und

FIG 3 ein Beispiel einer Ermittlung eines Maßes für die Sensorzuverlässigkeit.

Soweit zweckdienlich, werden in den Figuren dieselben Bezugszeichen für dieselben oder einander entsprechende Elemente der Erfindung verwendet.

Beschreibung der Ausführungsformen

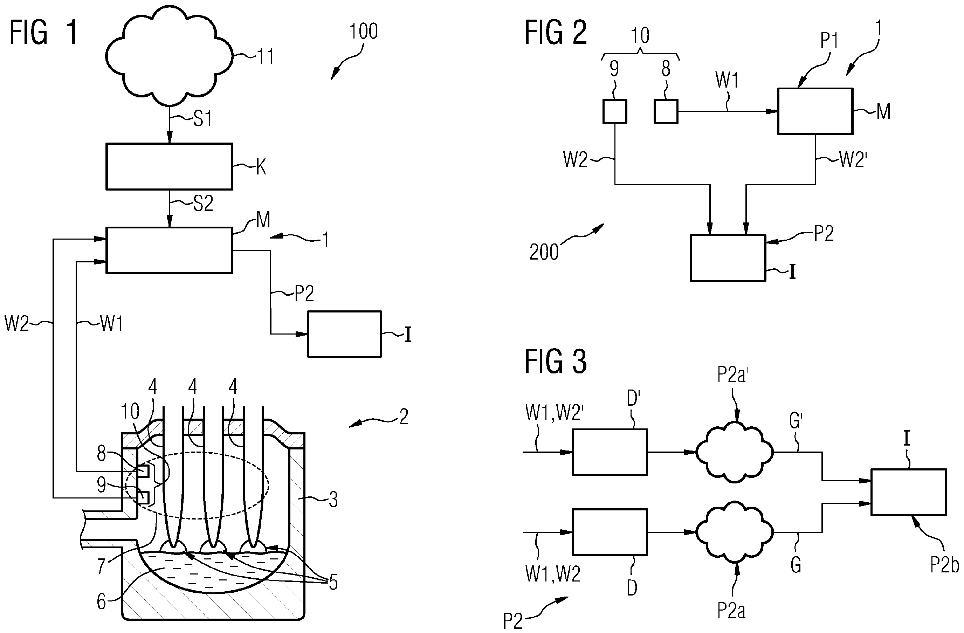

FIG 1 zeigt ein Beispiel eines Verfahrens 100 zur Entwicklung eines Prozessmodells 1 für die Sensorüberwachung in einem technischen Prozess 2. Vorliegend betrifft der technische Prozess 2 rein beispielhaft die Metallherstellung in einem Lichtbogenofen 3. In dem Lichtbogenofen 3 werden Lichtbögen 5 zwischen Elektroden 4 und einem elektrisch leitfähigen Material 6 erzeugt, um das Material 6 einschmelzen und, nach Entfernen von Schlacke, das darin enthaltene flüssige Metall abführen zu können.

Ausgehend von einer genauen Kenntnis des technischen Prozesses 2 wird in einem Verfahrensschritt S1 wenigstens eine Korrelation K zwischen Prozessparametern 7 des Prozesses 2 und/oder einem Sensorsignal W1 wenigstens eines Sensors 8, der einer Sensorengruppe 10 zur Überwachung des Prozesses 2 angehört, einerseits und einem Sensorsignal W2 wenigstens eines weiteren Sensors 9, welcher ebenfalls der Sensorengruppe 10 angehört, vorgegeben. Diese Kenntnis des technischen Prozesses 2 ist in FIG 1 als Experten- oder Domänenwissen 11 angedeutet. Neben der Kenntnis von für den Prozess 2 charakteristischen physikalischen Zusammenhängen zum Beispiel zwischen verschiedenen Prozessparametern 7, etwa der Temperatur im Lichtbogenofen 3, des Drucks im Lichtbogenofen 3, des Stromflusses in den Elektroden 4, der Temperatur des geschmolzenen Materials 6, der Füllstandshöhe des Lichtbogenofens 3, der chemischen Zusammensetzung der Atmosphäre bzw. der Konzentration einzelner Elemente im Lichtbogenofen 3 und/oder dergleichen kann solches Experten- oder Domänenwissen 11 auch Erfahrungswerte enthalten, etwa wie stark oder mit welcher Geschwindigkeit sich Sensorsignale W1, W2 ändern, wenn sich auch einzelne Prozessparameter 7 und/oder andere Sensorsignale W2, W1 ändern oder welche Sensorsignale W1, W2 im normalen Prozessverlauf überhaupt auftreten. Folglich kann als Korrelation K insbesondere ein physikalisches Modell vorgegeben werden, welches zumindest einen Teil des Prozesses 2 oder die Interaktion zumindest eines der Sensoren 8, 9 der Sensorengruppe 10 mit seinem Umfeld beschreibt. Beispielsweise kann die Korrelation K in Form einer physikalischen Gleichung oder Ungleichung vorgegeben werden.

In einem weiteren Verfahrensschritt S2 wird ein datengetriebenes Modell M bereitgestellt, welches ausgehend von vorgegebenen Sensorsignalen W1 von mehreren Sensoren 8 (aus Übersichtlichkeitsgründen ist in FIG 1 nur ein Sensor 8 dargestellt) der Sensorengruppe 10 ein Sensorsignal eines anderen Sensors 9 der Sensorengruppe 10 prädiziert. Dem Bereitstellen des Modells M wird dabei die vorgegebene Korrelation K zugrunde gelegt. Anders gesagt wird das datengetriebene Modell M, das den Zusammenhang zwischen dem Sensorsignal W1 und dem Sensorsignal W2 beispielsweise statistisch erfasst, ausgehend von der vorgegebenen Korrelation K entwickelt. Das datengetriebene Modell M kann so die vorgegebene Korrelation K widerspiegeln, was seine Zuverlässigkeit und Präzision signifikant erhöhen kann.

Ein Beispiel für das Bereitstellen des datengetriebenen Modells M ist das Trainieren eines neuronalen Netzes mit einem Trainingsdatensatz, der eine Vielzahl von auf Grundlage der Korrelation K ausgewählten Sensorsignalen W1, W2 enthält. Alternativ kann ein allgemeiner Trainingsdatensatz mit einer Vielzahl von Sensorsignalen W1, W2 auf Grundlage der Korrelation K vorverarbeitet, zum Beispiel bereinigt, werden, um ihn dann dem Trainieren des neuronalen Netzes zugrunde zu legen.

Ein anderes Beispiel für das Bereitstellen des datengetriebenen Modells M ist das Entwickeln eines neuronalen Netzes aus der Korrelation K heraus, wie es aus dem "deep unfolding"-Verfahren bekannt ist. Ein solcher Ansatz ist insbesondere denkbar, wenn die Korrelation K eine oder mehrere physikalische Gleichungen, welche den technischen Prozess 2, Zusammenhänge zwischen den Prozessparametern 7 und/oder den Sensorsignalen W1, W2 beschreiben, umfasst.

Ein weiteres Beispiel für das Bereitstellen des datengetriebenen Modells M ist das Ermitteln von Hauptkomponenten der Sensorsignale W1, W2, etwa mithilfe der Hauptkomponentenanalyse (engl. "principal component analysis", PCA). Das Modell M wird hierbei durch eine orthogonale Matrix verkörpert, welche aus den Eigenvektoren der Kovarianzmatrix der Sensorsignale W1, W2 gebildet wird.

Mithilfe des so bereitgestellten, insbesondere entwickelten, datengetriebenen Modells M, welches als Prozessmodell 1 für die Sensorüberwachung einsetzbar ist, kann auf Grundlage der Sensorsignale W1, W2 zuverlässig und präzise identifiziert werden, welches der Sensorsignale W1, W2 fehlerbehaftet sein könnte. Beispielsweise kann in einem Verfahrensschritt P2 ein Maß für die Sensorzuverlässigkeit I zumindest eines der Sensoren 8, 9 der Sensorengruppe 10 ermittelt werden, wie in FIG 2 im Detail beschrieben ist.

FIG 2 zeigt ein Beispiel eines Verfahrens 200 zur Überwachung eines Sensors 9, der zur Überwachung eines technischen Prozesses eingerichtet und angeordnet ist (vgl. FIG 1). Der Sensor 9 gehört zusammen mit weiteren Sensoren 8 zu einer Sensorengruppe 10. Bei der Ausführung des technischen Prozesses werden von den Sensoren 8, 9 der Sensorengruppe 10 Sensorsignale W1, W2 erzeugt, welche den Prozess charakterisieren.

Zur Überwachung des Sensors 9 wird in einem Verfahrensschritt P1 eine Vorhersage für das Sensorsignal W2 ebendieses Sensors gemacht. Das derart prädizierte Sensorsignal ist mit dem Bezugszeichen W2' versehen. Der Prädiktion wird ein Prozessmodell 1 zugrunde gelegt, welches zuvor wie im Zusammenhang mit FIG 1 beschrieben entwickelt wurde. Folglich wird das Prozessmodell 1 verkörpert durch ein datenbetriebenes Modell M, welches eine vorgegebene Korrelation zwischen Prozessparametern und/oder wenigstens einem Sensorsignal W1 mit wenigstens einem anderen Sensorsignal W2 berücksichtigt.

Auch wenn in FIG 2 nur zwei Sensoren 8, 9 gezeigt sind, weist die Sensorengruppe 10 vorzugsweise noch weitere Sensoren 8 auf. Das Sensorsignal W2 des Sensors 9 wird zweckmäßigerweise entsprechend auf Grundlage von Sensorsignalen W1 mehrerer Sensoren 8 der Sensorengruppe 10 prädiziert.

Ein denkbares Vorgehen für die Prädiktion des Sensorsignals W2 in Verfahrensschritt P1 wird anhand eines datengetriebenen Modells M, welches von einer durch eine Hauptkomponentenanalyse erhaltenen orthogonalen Matrix C verkörpert wird, rein beispielhaft durch die folgende Gleichung beschrieben:

$$x'_j = \frac{[\mathbf{x}_{-j}^T \ 0 \ \mathbf{x}_{+j}^T]\mathbf{c}_j}{1 - c_{jj}}.$$

Hierbei ist $x'_j$ das prädizierte Sensorsignal W2', welches beispielsweise mit einem zu erwartenden Messwert assoziiert ist. Der Index $j$ kennzeichnet den Sensor 9, dessen tatsächliches Signal W2 bzw. Messwert überprüft werden soll. Im Vektor x sind alle Sensorsignale W1, W2 zusammengefasst. *x* kann deshalb auch als Messergebnis bezeichnet werden. Das Signal W2 kann folglich auch als Komponente oder "feature" $j$ des Vektors x bzw. des Messergebnisses aufgefasst werden.

$\mathbf{x}_{-j}$ stellt einen Teil des Vektors x dar, der alle Sensorsignale W1 bis zum Signal W2, d.h. alle "features" vom Index 0 bis zum Index $j$, enthält. $\mathbf{x}_{+j}$ enthält alle weiteren Sensorsignale W1 ab dem Signal W2, d.h. alle "features" vom Index $j + 1$ bis zu einem Index Z, wobei Z die Gesamtzahl aller Sensoren 8, 9 bzw. Sensorsignale W1, W2 angibt.

Der Vektor $\mathbf{c}_j$ enthält die Zeile oder Spalte j der orthogonalen sMatrix C. $c_{jj}$ ist der entsprechende Eintrag auf der Diagonalen der orthogonalen Matrix C. Die Matrix C berechnet sich dabei gemäß $C = V_p V_p^T$, wobei $V_p$ die sog. Transformationsmatrix der PCA ist, welche die Eigenvektoren enthält und die Dimension ZxZ hat.

Das prädizierte Sensorsignal W2' bzw. $x'_j$ kann im vorliegenden Fall als eine Rekonstruktion aus den übrigen Sensorsignalen W1 bzw. $\mathbf{x}_{-j}$ und $\mathbf{x}_{+j}$ mithilfe der orthogonalen Matrix C, d. h. der Prinzipalkomponenten eines entsprechenden Trainingsdatensatzes, verstanden werden.

Mithilfe des prädizierten Sensorsignals W2' kann in einem weiteren Verfahrensschritt P2 ein Maß I für die Sensorzuverlässigkeit des Sensors 9 ermittelt werden. Zweckmäßigerweise wird dazu das prädizierte Sensorsignal W2' mit dem tatsächlichen Sensorsignal W2 des zu überwachenden Sensors 9 in Beziehung gesetzt. Dies ist im Detail in FIG 3 gezeigt.

Gegebenenfalls ist es auch denkbar, mithilfe einer vorangehenden Überprüfung der Plausibilität des Sensorsignals W2 das Verfahren 200 zu beschleunigen. Dabei kann ein Plausibilitätskriterium verwendet werden, welches zweckmäßigerweise auf der vorgegebenen, dem datengetriebenen Modell M zugrundeliegenden Korrelation beruht. Grundsätzlich kann das Plausibilitätskriterium aber auch losgelöst von der vorgegebenen Korrelation sein. Erfüllt das Sensorsignal W2 bereits dieses Plausibilitätskriterium nicht, kann gegebenenfalls von einer Durchführung der Verfahrensschritte P1 und P2 abgesehen werden. Alternativ ist es aber auch denkbar, im Falle einer Verletzung bzw. Nichterfüllung des Plausibilitätskriteriums das Sensorsignal W2 zu verwerfen und stattdessen, beispielsweise zur Regelung des technischen Prozesses, das prädizierte bzw. aus den übrigen Sensorsignalen W1 rekonstruierte Sensorsignal W2' zu verwenden. In diesem Fall müsste zumindest der Verfahrensschritt P1 ausgeführt werden.

FIG 3 zeigt ein Beispiel einer Ermittlung P2 eines Maßes I für die Sensorzuverlässigkeit wenigstens eines Sensors, der einer Sensorengruppe zur Überwachung eines technischen Prozesses angehört. Hierbei kann in einem Verfahrensschritt P2a' ein Maß G' für die Abweichung eines ersten Messergebnisses D' der mehreren Sensoren der Sensorengruppe von einem vorgegebenen Messergebnis und in einem Verfahrensschritt P2a ein Maß G für die Abweichung eines zweiten Messergebnisses D der mehreren Sensoren der Sensorengruppe von dem vorgegebenen Messergebnis ermittelt werden. Das erste Messergebnis D' enthält dabei, neben den tatsächlichen Sensorsignalen W1 der mehreren Sensoren der Sensorengruppe, das prädizierte Sensorsignal W2' des zu überwachenden Sensors. Das zweite Messergebnis D enthält dagegen, neben den tatsächlichen Sensorsignalen W1 der mehreren Sensoren der Sensorengruppe, das tatsächliche Sensorsignal W2 des zu überwachenden Sensors. In Vektorschreibweise kann das erste Messergebnis D' als

$$x_j = [x_0, \ldots, x_{j-1}, x_j', x_{j+1}, \ldots, x_Z]$$ angegeben werden, wobei $x_i$ das $i$-te Sensorsignal W1 ist und $x_j'$ das prädizierte Sensorsignal W2'. Entsprechend kann das zweite Messergebnis D als $x = [x_0, \ldots, x_Z]$ angegeben werden.

Das Maß G, G' kann dann beispielsweise mithilfe der orthogonalen Matrix C als "squared prediction error" *SPE* ermittelt werden:

$$SPE(x_j) = \|\tilde{x}\|^2 = x_j^T(I - C)x_j$$

bzw.

$$SPE(x) = \|\overline{x}\|^2 = x^T(I - C)x.$$

Hierbei bezeichnet *I* die Einheitsmatrix.

In einem weiteren Verfahrensschritt P2b kann aus den Maßen G, G' das auch als *SVI* ("sensor validation index") bezeichenbare Maß I ermittelt werden, etwa indem die beiden Maße G, G' ins Verhältnis gesetzt werden:

$$SVI = \frac{SPE(x_j)}{SPE(x)}.$$

Für den Fall, dass der überwachte Sensor ein fehlerhaftes Signal W2 liefert, wird $SPE(x_j) \ll SPE(x)$. Folglich wird I sehr klein, insbesondere $SVI \ll 1$. Wenn der überwachte Sensor hingegen korrekt arbeitet bzw. nicht beeinträchtigt ist und somit ein korrektes Signal W2 liefert, wird $SPE(x_j) \approx SPE(x)$ und I damit etwa 1.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Prozessmodell |
|---|---|
| 2 | Prozess |
| 3 | Lichtbogenofen |
| 4 | Elektrode |
| 5 | Lichtbogen |
| 6 | Material |
| 7 | Prozessparameter |
| 8, 9 | Sensor |
| 10 | Sensorengruppe |
| 11 | Experten- oder Domänenwissen |
| 100, 200 | Verfahren |
| S1, S2 | Verfahrensschritte |
| P1, P2 | Verfahrensschritte |
| P2a, P2a' | Verfahrensschritte |
| P2b | Verfahrensschritt |
| W1, W2 | Sensorsignal |
| W2' | prädiziertes Sensorsignal |
| K | Korrelation |
| M | datengetriebenes Modell |
| I | Maß für die Sensorzuverlässigkeit |
| D, D' | Messergebnis |
| G, G' | Maß für die Abweichung von einem vorgegebenen Messergebnis |

**Patentansprüche**

1. Verfahren (100) zur Entwicklung eines Prozessmodells (1) für die Sensorüberwachung, aufweisend:

    - Vorgeben (S1) wenigstens einer Korrelation (K) zwischen Prozessparametern (7) eines technischen Prozesses (2) und/oder einem Sensorsignal (W1) wenigstens eines Sensors (8), der einer Sensorengruppe (10) zur Überwachung des Prozesses (2) angehört, und einem Sensorsignal (W2) wenigstens eines weiteren Sensors (9), welcher der Sensorengruppe (10) angehört; und
    - Bereitstellen (S2) eines datengetriebenen Modells (M), welches aus vorgegebenen Sensorsignalen (W1) von mehreren Sensoren (8) der Sensorengruppe (10) ein Sensorsignal (W2) eines anderen Sensors (9) der Sensorengruppe (10) prädiziert, auf Grundlage der wenigstens einen vorgegebenen Korrelation (K).

2. Verfahren (100) nach Anspruch 1, wobei beim Bereitstellen des datengetriebenen Modells (M) ein Standardalgorithmus zum Berechnen eines datengetriebenen Modells auf Grundlage der Korrelation (K) modifiziert wird.

3. Verfahren (100) nach Anspruch 1 oder 2, wobei beim Vorgeben der wenigstens einen Korrelation (K) ein physikalisches Modell bereitgestellt wird, das aus vorgegebenen Prozessparametern (7) des Prozesses (2) ein Sensorsignal (W2) des wenigstens einen weiteren Sensors (9) prädiziert.

4. Verfahren (100) nach Anspruch 3, wobei beim Bereitstellen des datengetriebenen Modells (M) ein datengetriebenes Modell (M) auf Grundlage des physikalischen Modells trainiert wird.

5.  Verfahren (100) nach einem der vorangehenden Ansprüche, wobei beim Bereitstellen des datengetriebenen Modells (M) eine "loss function" auf Grundlage der wenigstens einen vorgegebenen Korrelation (K) ausgewählt wird.

6.  Verfahren (100) nach einem der vorangehenden Ansprüche, wobei dem Bereitstellen des datengetriebenen Modells (M) Trainingsdaten zugrunde gelegt werden, welche auf Grundlage der wenigstens einen vorgegebenen Korrelation (K) transformiert werden.

7.  Prozessmodell (1) für die Sensorüberwachung, erhältlich durch ein Verfahren (100) nach den vorangehenden Ansprüchen.

8.  Verfahren (200) zur Überwachung eines Sensors (9), aufweisend:

    - Prädizieren (P1) eines Sensorsignals (W2') wenigstens eines Sensors (9) einer Sensorengruppe (10) mithilfe eines Prozessmodells (1) gemäß Anspruch 7, wobei die Prädiktion des Sensorsignals (W2') des wenigstens einen Sensors (9) auf Grundlage von Sensorsignalen (W1) mehrerer anderer Sensoren (8) der Sensorengruppe (10) durchgeführt wird;
    - Ermitteln (P2) eines Maßes (I) für die Sensorzuverlässigkeit des wenigstens einen Sensors (9) auf Grundlage des prädizierten Sensorsignals (W2') und eines tatsächlichen Sensorsignals (W2) des Sensors (9).

9.  Verfahren (200) nach Anspruch 8, wobei dem Ermitteln des Maßes (I) für die Sensorzuverlässigkeit ein Maß (G') für die Abweichung eines ersten Messergebnisses (D') der mehreren Sensoren (8, 9) der Sensorengruppe (10) von einem vorgegebenen Messergebnis und ein Maß (G) für die Abweichung eines zweiten Messergebnisses (D) der mehreren Sensoren (8, 9) der Sensorengruppe (10) vom vorgegebenen Messergebnis zugrunde gelegt wird, wobei das erste Messergebnis (D') das prädizierte Sensorsignal (W2') des wenigstens einen Sensors (9) enthält, und das zweite Messergebnis (D) das tatsächliche Sensorsignal (W2) des wenigstens einen Sensors (9) enthält.

10. Verfahren (100) nach Anspruch 8 oder 9, wobei geprüft wird, ob das tatsächliche Sensorsignal (W2) ein Plausibilitätskriterium erfüllt, und das Sensorsignal (W2') in Abhängigkeit eines Ergebnisses der Prüfung mithilfe des Prozessmodells (1) prädiziert wird.

FIG 1

FIG 2

FIG 3

## EUROPÄISCHER RECHERCHENBERICHT

**Nummer der Anmeldung**

EP 23 15 2470

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/189647 A1 (CALVO MARCOS [CH] ET AL) 5. Juli 2018 (2018-07-05) | 1-7 | INV. G05B13/02 G05B13/04 |
| Y | * Absatz [0034] – Absatz [0035] * ----- | 8-10 | |
| A | US 2015/169797 A1 (MARWAH MANISH [US] ET AL) 18. Juni 2015 (2015-06-18) * Absatz [0016] * ----- | 3 | |
| Y | WO 2019/194698 A1 (SIEMENS AG [DE]) 10. Oktober 2019 (2019-10-10) * Seite 17, Zeile 32 – Seite 18, Zeile 3 * * Seite 26, Zeile 25 – Seite 27, Zeile 8 * ----- | 8-10 | |
| A | US 2019/198136 A1 (HOU FANG [CN] ET AL) 27. Juni 2019 (2019-06-27) * das ganze Dokument * ----- | 1-10 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 8. Juni 2023 | Lefeure, Guillaume |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 2470

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2023

| Im Recherchenbericht angeführtes Patentdokument | Datum der Veröffentlichung | Mitglied(er) der Patentfamilie | | Datum der Veröffentlichung |
|---|---|---|---|---|
| US 2018189647 A1 | 05-07-2018 | CN | 110168570 A | 23-08-2019 |
| | | EP | 3563301 A1 | 06-11-2019 |
| | | US | 2018189647 A1 | 05-07-2018 |
| | | WO | 2018125346 A1 | 05-07-2018 |
| US 2015169797 A1 | 18-06-2015 | EP | 2856275 A1 | 08-04-2015 |
| | | US | 2015169797 A1 | 18-06-2015 |
| | | WO | 2013176681 A1 | 28-11-2013 |
| WO 2019194698 A1 | 10-10-2019 | KEINE | | |
| US 2019198136 A1 | 27-06-2019 | CN | 109643085 A | 16-04-2019 |
| | | US | 2019198136 A1 | 27-06-2019 |
| | | WO | 2018035718 A1 | 01-03-2018 |

EPO FORM P0461

Für nähere Einzelheiten zu diesem Anhang : siehe Amtsblatt des Europäischen Patentamts, Nr.12/82